# EUROPÄISCHE PATENTANMELDUNG

(11) **EP 3 984 357 A1**
(43) Veröffentlichungstag der Anmeldung: **20.04.2022**
(21) Anmeldenummer: 21201851.9
(22) Anmeldetag: 11.10.2021
(51) Int. Cl.: A01K 5/02

(54) **FUTTERABGABEANLAGE ZUR VERSORGUNG VON TIEREN MIT TIERNAHRUNG**

(30) Priorität: 14.10.2020 AT 5020020 U
(71) Anmelder: Lyschick & Müller Entwicklungs GbR, 97618 Wülfershausen (DE)
(72) Erfinder: May, Dietmar, 97618 Junkershausen (DE)
(74) Vertreter: Puchberger & Partner Patentanwälte

(57) **Zusammenfassung**

Die Erfindung betrifft eine Futterabgabeanlage (1) zur Versorgung von Tieren mit Tiernahrung umfassend eine Zufuhrvorrichtung (3), einen Abgabebehälter (4) und eine Dosiervorrichtung (5), von welcher ein Dosierspalt (6) definiert ist. Die Dosiervorrichtung (5) umfasst ein kegelförmiges Verteilorgan (7), welches eine Kegelachse (8) definiert und in den Abgabebehälter (4) hineinragt. Die Dosiervorrichtung (5) umfasst weiters ein Förderorgan (11) und ein daran angeordnetes Betätigungsorgan (12), wobei der Dosierspalt (6) zwischen einem bodenseitigen Ende (13) des Abgabebehälters (4) und dem Förderorgan (11) angeordnet ist. Das Förderorgan (11) ist am kegelförmig ausgebildeten Verteilorgan (7) um seine Kegelachse (8) drehbeweglich gelagert.

## Beschreibung

Die Erfindung betrifft eine Futterabgabeanlage zur Versorgung von Tieren mit Tiernahrung, insbesondere mit Trockenfutter, an einer Futterstelle.

Das DE 20 2012 003 459 U1 beschreibt eine Vorrichtung zur Einzeltierfütterung von Schweinen und ist zur ad libitum Fütterung mit Trockenfutter vorgesehen. Das Trockenfutter fließt über ein Futterrohr in einen Futtertrog, wobei ein Auslaufende des Futterrohrs an eine Trogsole des Futtertrogs angepasst ist. Durch eine seitlich angebrachte Höhenverstellung kann ein Futterspalt und so auch die durch den Schüttwinkel bedingte, in den Futtertrog laufende Futtermenge eingestellt werden. Durch das ständige Nachrutschen des Futters und durch das nach allen Seiten eingeschränkt bewegliche Futterrohr soll das Verkleben des Auslaufspalts verhindert werden. Nachteilig dabei ist, dass bei hohem Füllstand die Gesamtmasse des Futterrohrs mitsamt dem darin aufgenommen Futter nur schwer vom zu fütternden Schwein bewegt werden kann. Weiters kann es bei bestimmten Stellungen des Futterrohrs und dem dazwischen gebildeten Futterspalt bedingt durch den Schüttwinkel zu einer unkontrollierten hohen Abgabemenge des Futters kommen.

Aufgabe der vorliegenden Erfindung war es, die Nachteile des Standes der Technik zu überwinden und eine Futterabgabeanlage zur Verfügung zu stellen, mittels derer eine kontrolliertere und über eine längere Zeitspanne andauernde und rationierte Futterabgabe erzielt werden kann.

Diese Aufgabe wird durch eine Futterabgabeanlage gemäß den Ansprüchen gelöst.

Die erfindungsgemäße Futterabgabeanlage dient zur Versorgung von Tieren, insbesondere von Schweinen, mit Tiernahrung an einer Futterstelle, wobei als Tiernahrung insbesondere ein Trockenfutter vorgesehen sein kann. Die Tiernahrung kann vor der Bereitstellung an der Futterabgabeanlage aus unterschiedlichen Bestandteilen zu einem Gemisch vermengt oder vermischt werden und so der Futterabgabeanlage zur Abgabe an das oder die Tiere bereitgestellt werden. Die Futterabgabeanlage umfasst
- eine Zufuhrvorrichtung, welche Zufuhrvorrichtung dazu ausgebildet ist, die zur Versorgung der Tiere vorgesehene Tiernahrung zur Futterstelle zu verbringen,
- einen Abgabebehälter, welcher Abgabebehälter zur Aufnahme der zuzuführenden Tiernahrung ausgebildet ist und mit der Zufuhrvorrichtung in Strömungsverbindung steht oder in Strömungsverbindung bringbar ist,
- eine Dosiervorrichtung, welche Dosiervorrichtung zur mengenmäßigen Abgabe der abzugebenden Tiernahrung aus dem Abgabebehälter ausgebildet ist und bodenseitig des Abgabebehälters angeordnet oder ausgebildet ist, und einen Dosierspalt definiert, wobei weiters noch vorgesehen ist,
- dass die Dosiervorrichtung ein kegelförmig ausgebildetes Verteilorgan umfasst, welches Verteilorgan eine Kegelachse definiert und bodenseitig bezüglich des Abgabebehälters angeordnet ist,
- dass das kegelförmig ausgebildete Verteilorgan mit seinem sich kegelförmig verjüngenden Verteilorganende zumindest teilweise in den Abgabebehälter hineinragt,
- dass die Dosiervorrichtung weiters ein Förderorgan für die abzugebende Tiernahrung und zumindest ein am Förderorgan angeordnetes oder ausgebildetes Betätigungsorgan umfasst,
- dass der Dosierspalt der Dosiervorrichtung zwischen einem bodenseitigen Ende des Abgabebehälters und dem Förderorgan angeordnet ist, und
- dass das Förderorgan am kegelförmig ausgebildeten Verteilorgan um seine Kegelachse drehbeweglich gelagert ist.

Der dadurch erzielte Vorteil liegt darin, dass durch das kegelförmig ausgebildete Verteilorgan, welches überwiegend der gleichmäßigen umfänglichen Futteraufteilung dient, in Verbindung mit dem eine geringe Abmessung aufweisenden Dosierspalt und dem zusätzlichen am Verteilorgan drehbar gelagerten Förderorgan erst dann eine dosierte Abgabe des im Abgabebehälter befindlichen Futters erfolgt, wenn vom zumindest einem zu fütternden Tier das Förderorgan in eine Schwenkbewegung um die Kegelachse verbracht wird. Dies erfolgt zumeist mit dem Rüssel oder der Schnauze des Tiers. Das Förderorgan bildet dabei einen Bestandteil der Dosiervorrichtung aus und ragt zumindest teilweise am bodenseitig zugewendeten Ende in den Innenraum des Abgabebehälters hinein. Das im Abgabebehälter befindliche Tierfutter wird bei einer Dreh- oder Schwenkbewegung des Förderorgans bedingt durch dessen drehbarer Lagerung am Verteilorgan aus dem Innenraum durch den an die Abmessungen der Einzelteile des Tierfutters angepassten Dosierspalt nach außen bewegt und kann je nach Ausbildung des Verteilorgans vom zu fütternden Tier entweder direkt vom Förderorgan aufgenommen und verzehrt werden oder das Futter bewegt sich entlang des kegelig ausgebildeten Verteilorgans in Richtung auf den Boden.

Weiters kann es vorteilhaft sein, wenn der Abgabebehälter hohlzylinderförmig ausgebildet ist und bevorzugt an seinem dem bodenseitigen Ende gegenüberliegenden Ende mit einer Stirnwand verschlossen ist. Damit kann eine ungewollte Verschmutzung und eine gewisse Abschottung des im Abgabebehälter befindlichen Futters erzielt werden. Darüber hinaus kann auch eine Führung von der aus dem Speicherbehälter in den Abgabebehälter führenden Verbindungsleitung, insbesondere dem Ablaufrohr, geschaffen werden. Dies dann, wenn die Verbindungsleitung die Stirnwand in einer darin befindlichen Öffnung durchsetzt.

Eine andere Ausführungsform zeichnet sich dadurch aus, dass der Abgabebehälter bezüglich des Verteilorgans in Richtung der Kegelachse des Verteilorgans verlagerbar ist. Damit kann die Größe des Dosierspalts oder die Spaltweite über den Umfang des Abgabebehälters und dem Förderorgan an die Einzelstückgröße des jeweils abzugebenden Futters eingestellt werden.

Eine weitere mögliche Ausführungsform hat die Merkmale, dass am Abgabebehälter mehrere über den Umfang verteilt angeordnete und in radialer Richtung abstehende Trennelemente angeordnet sind. Damit kann der sich über den Umfang des Verteilorgans erstreckende Fressplatz in mehrere kleinere Abschnitte unterteilt werden.

Eine weitere Ausbildung sieht vor, dass die Trennelemente derart angeordnet oder ausgebildet sind, dass eine vollständige umfängliche Umdrehung des Förderorgans mitsamt dessen zumindest einen Betätigungsorgan um die Kegelachse durchführbar ist. Damit kann eine ungehinderte relative Drehbewegung des Förderorgans mit dem zumindest einen daran befindlichen Betätigungsorgan ermöglicht werden.

Eine andere Ausführungsform zeichnet sich dadurch aus, dass das Förderorgan im Axialschnitt gesehen einen ersten Schenkel und einen winkelig dazu ausgerichteten zweiten Schenkel umfasst. Durch die beiden Schenkel kann so mittels des in den Innenraum des Abgabebehälters hineinragenden ersten Schenkels eine Förderbewegung des Futters bei Drehung des Förderorgans durch den Dosierspalt hindurch erzielt werden. Der zweite Schenkel, welcher über den Abgabebehälter nach außen vorragend ausgebildet ist, kann bereits eine erste Futterentnahmestelle bilden. Das vom zweiten Schenkel abgegebene Futter kann entweder noch am Verteilorgan an einer dafür vorgesehenen zweiten Futterentnahmestelle abgelagert werden oder dieses gelangt bis in Bereich der Aufstandsfläche. Die beiden Schenkel sind bevorzugt über den gesamten Umfang des Verteilorgans durchgängig ausgebildet.

Eine weitere bevorzugte Ausführungsform ist dadurch gekennzeichnet, dass der erste Schenkel am kegelförmig ausgebildeten Verteilorgan anliegend daran abgestützt ist. Durch das Anliegen an der Kegelfläche kann so in einem überwiegenden Ausmaß ein Eindringen oder Ablagern von Teilen des Tierfutters zwischen dem Förderorgan und dem Verteilorgan verhindert werden.

Weiters kann es vorteilhaft sein, wenn der zweite Schenkel eine in Normalrichtung bezüglich der Kegelachse verlaufende Ausrichtung oder eine auf die vom Abgabebehälter abgewendete Seite geneigt verlaufende Ausrichtung aufweist. Damit wird bei einer lotrechten Ausrichtung der Kegelachse eine mehr oder weniger nach außen abfallend geneigte Entnahmefläche für das Tierfutter geschaffen.

Eine andere alternative Ausführungsform zeichnet sich dadurch aus, dass das kegelförmig ausgebildete Verteilorgan im Axialschnitt gesehen einen treppenförmig ausgebildeten Ansatz mit einer dem Abgabebehälter zugewendeten Ansatzfläche aufweist und die Ansatzfläche eine gegengleich bezüglich des zweiten Schenkels verlaufende Ausrichtung aufweist und dass der zweite Schenkel bevorzugt auf der Ansatzfläche anliegend daran abgestützt ist. Damit kann in Kombination mit dem umlaufenden Ansatz eine tiefere Ausbildung der Umfangsnut im Verteilorgan leichter ermöglicht werden. Darüber hinaus kann so aber auch eine mögliche zusätzliche Führung und Lagerung für das Förderorgan und/oder das zumindest eine Betätigungsorgan geschaffen werden.

Eine weitere mögliche und gegebenenfalls alternative Ausführungsform hat die Merkmale, dass der Ansatz im Axialschnitt gesehen eine an die Ansatzfläche daran anschließend Stufenfläche umfasst und die Stufenfläche vom äußeren Rand der Ansatzfläche in Richtung auf eine Kegelfläche des Verteilorgans verlaufend ausgerichtet ist und bevorzugt eine zylindrische Umfangsform aufweist. Damit kann im Zusammenwirken mit dem zumindest einen Betätigungsorgan die Führung des Förderorgans verbessert werden.

Eine weitere Ausbildung sieht vor, dass das zumindest eine Betätigungsorgan randseitig außenliegend am zweiten Schenkel des Förderorgans angeordnet oder ausgebildet ist. So kann die Erreichbarkeit erleichtert und die Betätigung des Förderorgans sicherer gestaltet werden.

Eine andere Ausführungsform zeichnet sich dadurch aus, dass das zumindest eine Betätigungsorgan bevorzugt bügelförmig umlaufend ausgebildet ist und über den Umfang gesehen mehrere Einzelabschnitte hintereinander angeordnet oder vorgesehen sind. Damit kann die Verletzungsgefahr heruntergesetzt und die zu reinigende Fläche reduziert werden.

Eine weitere bevorzugte Ausführungsform ist dadurch gekennzeichnet, dass ein erster Einzelabschnitt im Axialschnitt gesehen eine in etwa parallele Ausrichtung bezüglich der Stufenfläche aufweist und unmittelbar benachbart zu dieser angeordnet ist. Damit kann eine bessere Zentrierung des Förderorgans bezüglich der Kegelachse des Verteilorgans erzielt werden.

Weiters kann es vorteilhaft sein, wenn das zumindest eine Betätigungsorgan zumindest teilweise in einer über den Umfang des Verteilorgans vertieft ausgebildeten Umfangsnut aufgenommen ist. Damit kann bei einer umfänglichen Bewegung des Betätigungsorgans eine zusätzliche Förderbewegung von dem in der Aufnahmenut befindlichen Tierfutter erzielt werden.

Eine andere Ausführungsform zeichnet sich dadurch aus, dass eine Auffangschale vorgesehen ist, welche Auffangschale bodenseitig des Verteilorgans angeordnet ist und das Verteilorgan in radialer Richtung auf die von der Kegelachse abgewendete Seite überragt. Damit kann das entlang des Verteilorgans herunterriesende Tierfutter in einem in Radialrichtung begrenzten umfänglichen Bereich gesammelt werden und nicht so aktiven Tieren zum Fressen bereitgestellt werden.

Eine weitere mögliche Ausführungsform hat die Merkmale, dass eine Verbindungsanordnung vorgesehen ist, mittels welcher Verbindungsanordnung ein Aufnahmeraum des Abgabebehälters mit der Zufuhrvorrichtung in Strömungsverbindung steht, bevorzugt in Leitungsverbindung steht, und die Verbindungsanordnung zumindest einen Speicherbehälter umfasst. Damit kann eine geführte Weiterleitung des angeförderten Tierfutters von der Zufuhrvorrichtung hin zum Abgabebehälter sichergestellt werden.

Eine weitere Ausbildung sieht vor, dass im Speicherbehälter abgabeseitig in Richtung zum Abgabebehälter ein betätigbares Verschlussorgan vorgesehen ist, welches Verschlussorgan zwischen einer Verschlussstellung und einer Abgabestellung und vice versa verstellbar ist. Damit kann eine noch bessere rationierte Fütterung ermöglicht werden.

Eine andere Ausführungsform zeichnet sich dadurch aus, dass ein betätigbares Sperrorgan zwischen der Zufuhrvorrichtung und dem Speicherbehälter vorgesehen ist, welches Sperrorgan zwischen einer Sperrstellung und einer Freigabestellung und vice versa verstellbar ist. Damit kann je nach Stellung des Sperrorgans eine Beschickung des Speicherbehälter ermöglicht oder unterbunden werden.

Zum besseren Verständnis der Erfindung wird diese anhand der nachfolgenden Figuren näher erläutert.

Es zeigen jeweils in stark vereinfachter, schematischer Darstellung:
- Fig. 1: ein erstes Ausführungsbeispiel einer Futterabgabeanlage, in Ansicht geschnitten;
- Fig. 2: ein Detail der Futterabgabeanlage nach Fig. 1 im Bereich von deren Dosierspalt, in Ansicht geschnitten und vergrößerter Darstellung;
- Fig. 3: ein zweites Ausführungsbeispiel einer Futterabgabeanlage, in Ansicht geschnitten.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind diese Lageangaben bei einer Lageänderung sinngemäß auf die neue Lage zu übertragen.

Der Begriff "insbesondere" wird nachfolgend so verstanden, dass es sich dabei um eine mögliche speziellere Ausbildung oder nähere Spezifizierung eines Gegenstands oder eines Verfahrensschritts handeln kann, aber nicht unbedingt eine zwingende, bevorzugte Ausführungsform desselben oder eine zwingende Vorgehensweise darstellen muss.

In ihrer vorliegenden Verwendung sollen die Begriffe "umfassend", "weist auf", "aufweisend", "schließt ein", "einschließlich", "enthält", "enthaltend" und jegliche Variationen dieser eine nicht ausschließliche Einbeziehung abdecken.

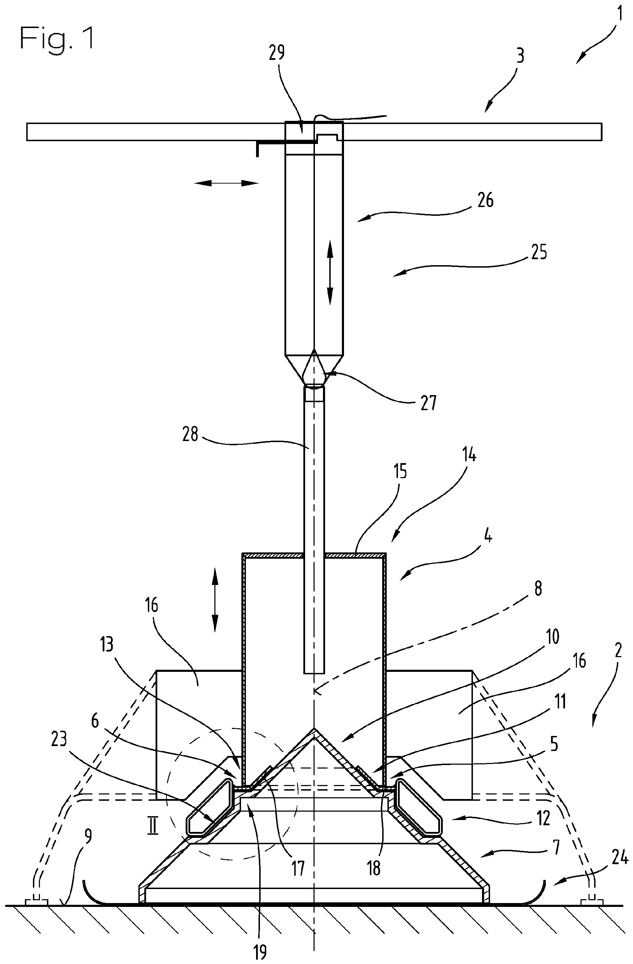

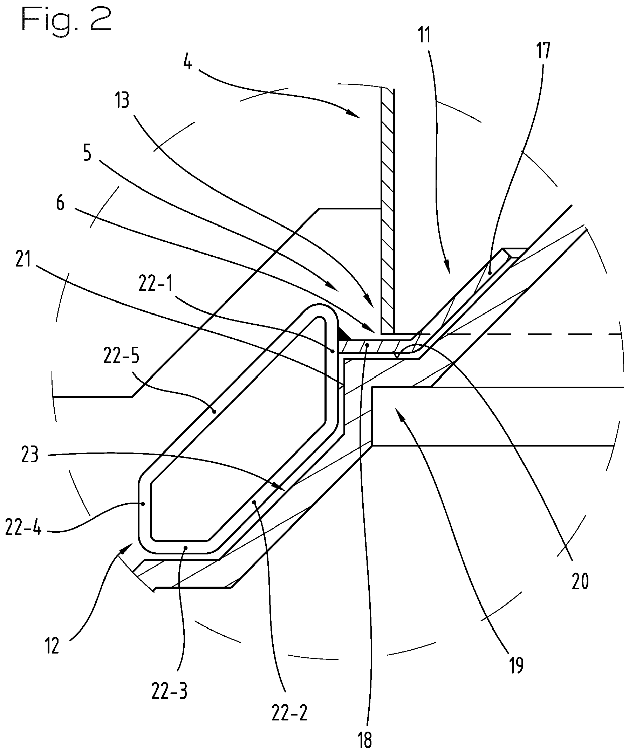

In den Fig. 1 und 2 ist ein erstes Ausführungsbeispiel einer Futterabgabeanlage 1 gezeigt, welche zur Abgabe und Versorgung von Tieren mit Tiernahrung ausgebildet ist bzw. dient. Diese wird bevorzugt bei der sogenannten Endmastfütterung von Tieren, insbesondere von Schweinen, eingesetzt.

Als Tiernahrung wird zumeist oder bevorzugt Trockenfutter verwendet. Die Tiernahrung kann selbst je nach Tierart und Fütterungszweck aus den unterschiedlichsten Bestandteilen zusammengemischt werden. Die Förderbewegung von der nicht dargestellten Mischvorrichtung oder Bereitstellungsvorrichtung zur Futterabgabeanlage 1 und einer an diesem Ort befindlichen Futterstelle 2 kann z.B. in Rohrleitungen, insbesondere Ringleitungen, mittels pneumatischer Förderung erfolgen.

Die Futterabgabeanlage 1 kann als Gesamtes auch als Futterautomat bezeichnet werden, mittels welcher oder mittels welchem eine rationellere Fütterung ermöglicht wird. Damit kann eine sogenannte Fresskreisbildung bevorzugt für die Bodenfütterung erzielt werden. Als Tiere sollen bevorzugt Schweine mit einem Gewicht beginnend bei ca. 8kg bis hin zum Schlachtgewicht rationiert gefüttert werden. Ein besonderes Augenmerk gilt dabei der Bindung des Tieres oder der Tiere an die Futterabgabeanlage 1, sodass dieses oder diese so lange wie möglich mit dem Fressen beschäftigt ist oder sind.

Durch das nachfolgend beschriebene gebremste Auslaufen der Tiernahrung aus der Futterabgabeanlage 1, nämlich dem Futterautomaten, werden die Tiere an den Fressplatzt fixiert. Dadurch sind die Tiere länger mit Fressen beschäftigt und es kommt in weiterer Folge zu weniger Beschädigungen an der Buchteneinrichtung oder zu weniger Verletzungen an Artgenossen, wie z.B. einem Schwanzbeißen oder dergleichen.

Die Futterabgabeanlage 1 umfasst eine allgemein als Zufuhrvorrichtung 3 bezeichnete Anlagenkomponente. Zumeist handelt es sich um eine Rohrleitungssystem, innerhalb welchem das Tierfutter mittels pneumatischem Förderstrom gefördert wird. Die Zufuhrvorrichtung 3 ist dazu ausgebildet die zur Versorgung der Tiere vorgesehene Tiernahrung zur Futterstelle 2 zu verbringen oder zu leiten.

Weiters umfasst die Futterabgabeanlage 1 auch noch einen Abgabebehälter 4, welcher auch als Vorratsbehälter bezeichnet werden kann. Der Abgabebehälter 4 ist zur Aufnahme der zuzuführenden Tiernahrung ausgebildet oder vorgesehen und steht mit der Zufuhrvorrichtung 3 in Strömungsverbindung oder ist mit dieser in Strömungsverbindung bringbar. Dies wird nachfolgend noch näher beschrieben.

Mittels einer Dosiervorrichtung 5 erfolgt die rationierte und gedrosselte Abgabe des im Innenraum des Abgabebehälters 4 aufgenommenen Tierfutters. Die Dosiervorrichtung 5 ist ihrerseits zur mengenmäßigen Abgabe der abzugebenden Tiernahrung aus dem Abgabebehälter 4 ausgebildet und ist bodenseitig des Abgabebehälters 4 angeordnet oder ausgebildet. Von der Dosiervorrichtung 5 wird unter anderem ein Dosierspalt 6 definiert.

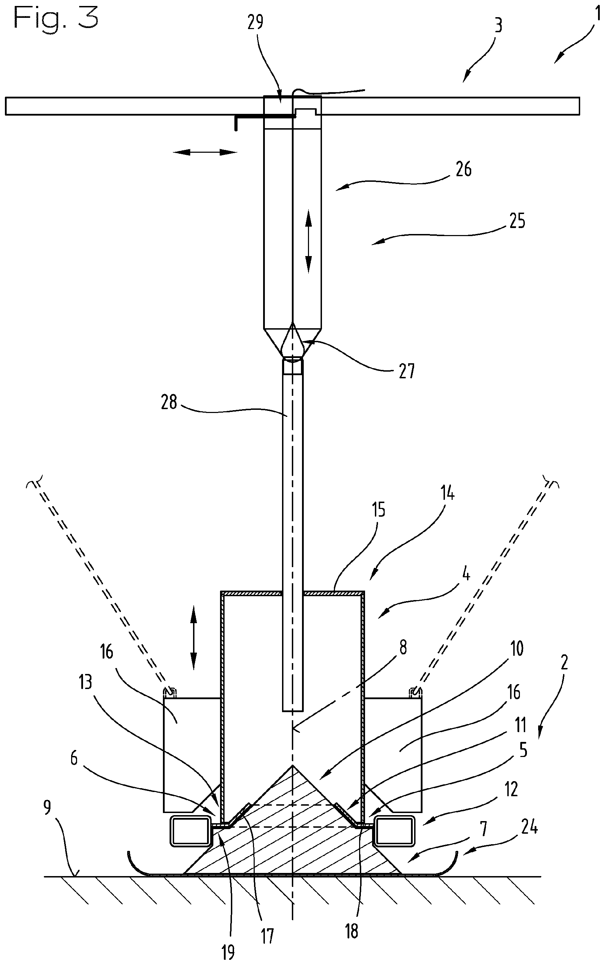

Die Dosiervorrichtung 5 umfasst ein überwiegend oder zum größten Anteil kegelförmig ausgebildetes Verteilorgan 7, welches eine Kegelachse 8 definiert. Das Verteilorgan 7 kann z.B. aus einem Formteil aus einem Blech oder einem Kunststoffmaterial gebildet sein und eine Art Hohlkörper bilden. Unabhängig davon oder zusätzlich dazu könnte das Verteilorgan 7 aber auch einem Vollmaterial-Körper gebildet sein, wie dies beim nachfolgenden Ausführungsbeispiel in der Fig. 3 dargestellt ist. Diese Ausbildung wäre aber auch bei diesem Ausführungsbeispiel möglich. Dazu können die unterschiedlichsten Werkstoffe eingesetzt werden. In diesem Fall kann bedingt durch die Eigenmasse oder das Eigengewicht die Standsicherheit erhöht werden.

Weiters ist zu ersehen, dass das Verteilorgan 7 bodenseitig bezüglich des Abgabebehälters 4 angeordnet ist und bevorzugt auf einer Aufstandsfläche 9 direkt oder indirekt abgestützt ist oder auf dieser auflagert. Das Verteilorgan 7 kann auch als Fresskegel bezeichnet werden, wobei die Futterentnahme an zueinander unterschiedlichen Höhen oder Abständen ausgehend vom Dosierspalt 6 bis hin zur Aufstandsfläche 9 erfolgen kann. Bei der Aufstandsfläche 9 handelt es sich zumeist um eine ebene Fläche, wie z.B. einem Hallenboden oder einem Stallboden. Die Kegelachse 8 des Verteilorgans 7 weist bevorzugt eine normale Ausrichtung bezüglich der bevorzugt horizontal ausgerichteten Aufstandsfläche 9 auf.

Das kegelförmig ausgebildete Verteilorgan 7 ragt mit seinem sich kegelförmig verjüngenden Verteilorganende 10 zumindest teilweise in das Innere des Abgabebehälters 4 hinein. An einer Kegelfläche des Verteilorgans 7 ist als Bestandteil der Dosiervorrichtung 5 ein eigenes Förderorgan 11 für die abzugebende Tiernahrung aus dem Abgabebehälter 4 drehbar oder drehbeweglich um die Kegelachse 8 gelagert. Das Förderorgan 11 liegt seinerseits bevorzugt lose am Verteilorgan 7, bevorzugt an dessen Kegelfläche, auf und ist bei befülltem Abgabebehälter 4 von der Masse oder dem Gewicht des Futters an das Verteilorgan 7 angedrückt. Der in der Fig. 2 dargestellte Spalt zwischen dem Verteilorgan 7 und dem Förderorgan 11 ist in übertriebener Größe dargestellt, um ineinander laufende Linien zu vermeiden.

Um das Förderorgan 11 durch die zu fütternden Tiere in eine Dreh- oder Schwenkbewegung um die Kegelachse 8 versetzen zu können, ist zumindest ein am Förderorgan 11 angeordnetes oder ausgebildetes Betätigungsorgan 12 vorgesehen. Bevorzugt befinden sich mehrere der Betätigungsorgan 12 über den Umfang verteilt am Förderorgan 11. Gleichzeitig fördert die Betätigung des Förderorgans 11 auch den Spieltrieb der Tiere, insbesondere der Schweine, und dient so deren Beschäftigung.

Im vorliegenden Ausführungsbeispiel ist der Dosierspalt 6 der Dosiervorrichtung 5 zwischen einem bodenseitigen Ende 13 des Abgabebehälters 4 und dem Förderorgan 11 angeordnet oder ausgebildet. Das bodenseitige Ende 13 kann auch als erstes Ende oder erster Endbereich bezeichnet werden. Zur Einstellung einer Spaltweite des Dosierspalts 6 kann der Abgabebehälter 4 bezüglich des Verteilorgans 7 in Richtung der Kegelachse 8 des Verteilorgans 7 verlagerbar sein. Dazu können bekannte Stellvorrichtungen, wie diese aus dem Stand der Technik bekannt sind, eingesetzt werden. In der jeweils eingestellten Position kann der Abgabebehälter 4 relativ bezüglich des Verteilorgans 7 ortsfest positioniert gehalten sein.

Der Abgabebehälter 4 ist bevorzugt hohlzylinderförmig ausgebildet und kann an seinem dem bodenseitigen Ende 13 gegenüberliegenden Ende 14 mit einer Stirnwand 15 zumindest bereichsweise oder vollständig verschlossen sein. Das dem ersten oder bodenseitigen Ende 13 gegenüberliegende Ende 14 kann auch als zweites Ende oder zweiter Endbereich bezeichnet werden.

Weiters ist noch dargestellt, dass am Abgabebehälter 4 mehrere über den Umfang verteilt angeordnete und in radialer Richtung abstehende Trennelemente 16 angeordnet sein können. Durch die bevorzugt kreisförmige Fressanordnung der Tiere (Fresskreisbildung) können dominantere Tiere ihren Fressradius nur gegen wenige Tiere verteidigen. Um eine über den Umfang gesehen durchgängige Drehbewegung des Förderorgans 11 um die Kegelachse 8 ermöglichen zu können, sind die Trennelemente 16 derart angeordnet oder ausgebildet, dass das Förderorgan 11 mitsamt dem zumindest einen Betätigungsorgan 12 dies kollisionsfrei durchführen kann. Es wäre dabei auch noch möglich, an mehreren der fahnenförmig abstehenden Trennelemente 16 jeweils ein stabförmig ausgebildetes Stützelement anzubringen, welches nur in strichlierten Linien angedeutet ist. Damit kann der Abgabebehälter 4 auch auf der Aufstandsfläche 9 abgestellt werden. Die Einstellung des Dosierspalts 6 kann mittels einstellbaren Füßen erfolgen. Es wäre aber auch möglich, den Abgabebehälter 4 an einer Decke des Stalls oder an einer Stallwand zu halten. Es sollen der Abgabebehälter 4 und das Verteilorgan 7 zueinander ortsfest positioniert angeordnet sein.

Das Förderorgan 11 weist im Axialschnitt gesehen einen ersten Schenkel 17 und einen winkelig dazu ausgerichteten zweiten Schenkel 18 auf. Das Förderorgan 11 ist über den Umfang gesehen durchgängig in Form eines Kreisrings ausgebildet. Der erste Schenkel 17 ist am kegelförmig ausgebildeten Verteilorgan 7, insbesondere dessen Kegelfläche, anliegend daran abgestützt. Dies bevorzugt deshalb, um einen Eintritt des Tierfutters zwischen den umlaufenden ersten Schenkel 17 und der Kegelfläche des Verteilorgans 7 weitgehendst zu vermeiden oder gänzlich zu verhindern.

Der zweite Schenkel 18 kann eine in Normalrichtung bezüglich der Kegelachse 8 verlaufende Ausrichtung aufweisen und ragt damit in Radialrichtung ausgehend vom ersten Schenkel 17 nach außen vor. Der zuvor beschriebene Dosierspalt 6 ist zwischen dem bodenseitigen Stirnende bzw. der Stirnfläche des Abgabebehälters 4 und dem zweiten Schenkel 18 des Förderorgans 11 ausgebildet. Es wäre aber auch möglich, den zweiten Schenkel 18 mit einer auf die vom Abgabebehälter 4 abgewendete Seite sowie in Richtung auf die Aufstandsfläche 9 geneigt verlaufenden Ausrichtung auszubilden.

Das kegelförmig ausgebildete Verteilorgan 7 kann im Axialschnitt gesehen einen treppenförmig ausgebildeten Ansatz 19 mit einer dem Abgabebehälter 4 zugewendeten Ansatzfläche 20 aufweisen. Der Ansatz 19 überragt die Kegelfläche des Verteilorgans 7 und bildet damit einen Vorsprung aus. Die Ansatzfläche 20 weist bevorzugt eine gegengleich bezüglich des zweiten Schenkels 17 verlaufende Ausrichtung auf. Weiters kann es vorteilhaft sein, wenn der zweite Schenkel 18 auf der Ansatzfläche 20 anliegend daran abgestützt ist. Dies kann sein, muss aber nicht erfolgen. Der Ansatz 19 ist dem ersten Ende 13 des Abgabebehälters 4 gegenüberliegend angeordnet, dies bei einer in etwa zueinander fluchtenden Ausrichtung der Längsachse des Abgabebehälters 4 bezüglich der Kegelachse 8.

Weiters weist der Ansatz 19 im Axialschnitt gesehen eine an die Ansatzfläche 20 daran anschließend Stufenfläche 21 auf. Die Stufenfläche 21 ist ausgehend vom äußeren Rand der Ansatzfläche 20 in Richtung auf die Kegelfläche des Verteilorgans 7 verlaufend ausgerichtet und kann bevorzugt eine zylindrische Umfangsform aufweisen. Das randseitige äußere Ende des zweiten Schenkels 18 überragt die Stufenfläche 21 in einem geringen Ausmaß.

Das zuvor beschriebene zumindest eine Betätigungsorgan 12 kann randseitig außenliegend am zweiten Schenkel 18 des Förderorgans 11 angeordnet oder ausgebildet sein. Die Form oder Ausbildung des Betätigungsorgans 12 kann unterschiedlichst erfolgen. Als mögliches Ausführungsbeispiel ist gezeigt, dass das Betätigungsorgan 12 aus einem Rundmaterial gebildet ist und zu einer umlaufend geschlossenen Bügelform umgeformt ist. Dazu sind hier mehrere Einzelabschnitte 22 vorgesehen, welche mit dem Zusatz "-1" bis "-5" versehen sind. Die mehreren Einzelabschnitte 22-1 bis 22-5 sind in Umfangsrichtung hintereinander angeordnet. Je nach gewählter Umfangsform oder Querschnittsform des Betätigungsorgans 12 können auch mehr oder weniger Einzelabschnitte 22 zur Bildung des Betätigungsorgans 12vorgesehen sein.

Ein erster Einzelabschnitt 22-1 weist bei diesem Ausführungsbeispiel im Axialschnitt gesehen eine in etwa parallele Ausrichtung bezüglich der Stufenfläche 21 auf und ist unmittelbar benachbart zu dieser angeordnet. Weiters kann es vorteilhaft sein, wenn das zumindest eine Betätigungsorgan 12 zumindest teilweise in einer über den Umfang des Verteilorgans 7 vertieft ausgebildeten Umfangsnut 23 aufgenommen ist. Die in der Kegelfläche vertieft ausgebildete Umfangsnut 23 mit ihrer Nutgrundfläche weist bevorzugt den gleichen Kegelwinkel auf wie das Verteilorgan 7. Weiters kann die Umfangsnut 23 auch noch dazu dienen, das aus dem Abgabebehälter 4 dosiert abgegebene Tierfutter, welches zumeist entlang der Kegelfläche des Verteilorgans 7 hinabrollt oder hinabgleitet, vor einem weiteren hinabrollen oder hinabgleiten zu hindern und aufzufangen. Damit kann die Futterentnahme von den zu fütternden Tieren bereits aus der erfolgen. Mittels des oder der Betätigungsorgane 12 kann eine gewisse umfängliche Verteilung des dort befindlichen Tierfutters erfolgen. Bevorzugt sind die Querschnittsform der Umfangsnut 23 und des oder Betätigungsorgane 12 aufeinander abgestimmt und angeglichen.

Bodenseitig kann auch noch eine Auffangschale 24 vorgesehen sein, um so das entlang des Verteilorgans 7 in Richtung auf die Aufstandsfläche 9 sich bewegende Tierfutter in direkter Umgebung um das Verteilorgan 7 auffangen und bereithalten zu können. Die Auffangschale 24 überragt das das Verteilorgan 7 in radialer Richtung auf die von der Kegelachse 8 abgewendete Seite und bildet um das Verteilorgan 7 herum einen Auffangraum aus.

Zur Verbindung zwischen dem Innenraum oder dem Aufnahmeraum des Abgabebehälters 4 und der Zufuhrvorrichtung 3 kann eine Verbindungsanordnung 25 vorgesehen sein, welche unter anderem einen Speicherbehälter 26 umfassen kann. Mittels der Verbindungsanordnung 25 kann der Aufnahmeraum des Abgabebehälters 4 und die Zufuhrvorrichtung 3 in Strömungsverbindung stehen, bevorzugt in Leitungsverbindung stehen.

Im Speicherbehälter 26 kann abgabeseitig in Richtung zum Abgabebehälter 4 ein betätigbares Verschlussorgan 27 vorgesehen sein, welches manuell und/oder mittels eines Antriebsorgans verstellbar ist. Das Verschlussorgan 27 kann auch als Tropfenverschluss bezeichnet oder ausgeführt sein und seinerseits zwischen einer Verschlussstellung und einer Abgabestellung und vice versa verstellt werden. So kann zuerst das Tierfutter in den Speicherbehälter 26 gefördert und bereitgestellt werden. Nach der Betätigung und Verbringen des Verschlussorgans 27 in seine Abgabestellung kann die Abgabe aus dem Speicherbehälter 26 in den Abgabebehälter 4 erfolgen. Dazu kann eine Verbindungsleitung 28 vorgesehen sein, welche z.B. durch ein Ablaufrohr gebildet ist.

Zusätzlich kann auch noch ein betätigbares Sperrorgan 29 zwischen der Zufuhrvorrichtung 3 und dem Speicherbehälter 26 vorgesehen sein. Das Sperrorgan 29 dient dazu, die Beschickung des Speicherbehälters 26 mit dem Tierfutter zu ermöglichen oder zu unterbinden. Dazu ist das Sperrorgan 29 zwischen einer Sperrstellung und einer Freigabestellung und vice versa verstellbar ausgebildet.

In der Fig. 3 ist eine weitere und gegebenenfalls für sich eigenständige Ausführungsform der Futterabgabeanlage 1 gezeigt, wobei wiederum für gleiche Teile gleiche Bezugszeichen bzw. Bauteilbezeichnungen wie in den vorangegangenen Fig. 1 und 2 verwendet werden. Um unnötige Wiederholungen zu vermeiden, wird auf die detaillierte Beschreibung in den vorangegangenen Fig. 1 und 2 hingewiesen bzw. Bezug genommen. Diese wird bevorzugt bei der sogenannten Vormastfütterung von Tieren, insbesondere von Schweinen, eingesetzt.

Der grundsätzliche Aufbau und die Anordnung der einzelnen Anlagenkomponenten entspricht dem zuvor in den Fig. 1 und 2 beschriebenen Ausführungsbeispiel. Es ist lediglich eine geringfügige bauliche Änderung beim Verteilorgan 7 vorgesehen. Deshalb wird darauf hier nicht mehr näher eingegangen. Bei diesem Ausführungsbeispiel ist die Bauhöhe des Verteilorgans 7 etwas geringer gewählt als bei dem zuvor beschriebenen Ausführungsbeispiel. Es ist hier beim Verteilorgan 7 die zuvor beschriebene Umfangsnut 23 nicht vorgesehen, in welcher das Betätigungsorgan 12 oder die Betätigungsorgane 12 aufgenommen sind oder in diese hineinragen.

Es ist auch hier wiederum der Ansatz 19 mit seiner Ansatzfläche 20 und der daran anschließenden Stufenfläche 21 vorgesehen. Bis auf den über die Kegelfläche vorragenden Ansatz ist eine gleichmäßig geneigt ausgebildete Kegelfläche mit einem zueinander gleichen Kegelwinkel vorgesehen. Es wäre aber möglich, sowohl bei diesem Ausführungsbeispiel des Verteilorgans 7 als auch bei dem zuvor in den Fig. 1 und 2 beschriebenen Verteilorgan 7 die einzelnen Kegelflächen mit einem zueinander unterschiedlichen Kegelwinkel auszubilden. So könnte z.B. die bodenseitig befindliche Kegelfläche und/oder die Nutgrundfläche der zuvor beschriebenen Umfangsnut 23 mit einem größeren oder kleineren Kegelwinkel ausgebildet sein als das Verteilorgan 7 im Bereich seines in den Abgabebehälter 4 hineinragenden Verteilorganende 10.

Bei den beiden beschriebenen Ausführungsbeispielen wird von einem zumeist automatisiertes Fütterungssystem (Trockenfütterung, pneumatische Förderung,.....) via die Zufuhrvorrichtung 3 der Speicherbehälter 26 mit der Ration für die nächste Fütterung befüllt. Sollte kein Futter an dieser Fütterungsstelle ausdosiert werden, so kann der Speicherbehälter 26 durch das Sperrorgan 29, wie z.B. eine Verschlusseinrichtung, verschlossen werden. Ansonsten wird die Ration zum Fütterungszeitpunkt durch Betätigen z.B. eines Auslöseseils für das Verschlussorgan 27 und das damit verbundene Anheben eines Tropfenverschlusses über die Verbindungsleitung 28 in den bodenseitigen Abgabebehälter 4 abgelassen. In diesem liegt es dann auf dem als Auslaufkegel ausgebildeten Verteilorgan 7, sodass das Futter entlang des Kegels nach außen hin zum Dosierspalt 6 rutscht. Der einstellbare Dosierspalt 6, welcher auch als Auslaufspalt bezeichnet werden kann, ist dabei so klein eingestellt, dass das Futter nur langsam aus dem bodenseitigen Abgabebehälter 4 herausrieselt bzw. der Futterfluss fast zum Erliegen kommt. Der bodenseitige Abgabebehälter 4 ist mit den Trennelementen 16 als sogenannte Fressplatzteiler versehen. Dadurch wird für ein Tier die Sicht auf einen kleinen Teil des Fressbereiches begrenzt.

Aktivere Tiere mit mehr Futterneid werden während des Fressvorganges immer wieder die Dosiervorrichtung 5 mit deren Förderorgan 11 mittels des oder der Betätigungsorgane 12 betätigen, welche sich im Bereich des Dosierspalts 6 zwischen bodenseitigen Abgabebehälter 4 und dem auf dem Verteilorgan 7 abgestützten Förderorgan 11 befindet und in den Abgabebehälter 4 hineinreicht. Dadurch wird immer wieder frisches Futter aus dem Abgabebehälter 4 herausgerührt, wovon dann auch weniger aktive Tiere profitieren.

Aktivere Tiere fressen dadurch eher weiter oben am Verteilorgan 7. Weniger aktive Tiere bevorzugen eher die Region um den Boden herum. Da die Dosiervorrichtung 5 mit deren Förderorgan 11 und Betätigungsorgan 12 auch aus dem Abgabebehälter 4 heraus aus dem kegelförmigen Verteilorgan 7 entlang reicht, wird auch Futter, welches am Kegel des Verteilorgans 7 außerhalb des Abgabebehälters 4 liegt, zum Abrutschen in Richtung auf die Aufstandsfläche 9 bewegt. Somit werden wiederum die weniger aktiven Tiere von den aktiven Tieren passiv mitversorgt. Dadurch wird ebenfalls erreicht, dass die Tiere alle Regionen am und um die Futterstelle des Futterabgabe-Automaten bestens reinigen und somit keine Futterreste zurückbleiben bzw. die Flächen um den Futterautomaten und die Fressflächen sauber bleiben. Gleichzeitig fördert die Betätigung der Dosiervorrichtung 5 mit dessen Förderorgan 11 und den Betätigungsorganen 12 auch den Spieltrieb der Tiere und dient auch so zu deren Beschäftigung.

Durch das langsame Herausrieseln werden die Tiere sehr lange an den Fressplatz gebunden, das Futter wird langsam aufgenommen und dadurch besser eingespeichelt und verdaut. Dieser Vorgang wiederholt sich bevorzugt mehrmals am Tag. Durch die eingestellte Menge am Speicherbehälter 26 ist im Vergleich zu einem herkömmlichen Futterautomaten, auch die ausdosierte Menge an Futter insbesondere pro Tier bekannt.

Die Ausführungsbeispiele zeigen mögliche Ausführungsvarianten, wobei an dieser Stelle bemerkt sei, dass die Erfindung nicht auf die speziell dargestellten Ausführungsvarianten derselben eingeschränkt ist, sondern vielmehr auch diverse Kombinationen der einzelnen Ausführungsvarianten untereinander möglich sind und diese Variationsmöglichkeit aufgrund der Lehre zum technischen Handeln durch gegenständliche Erfindung im Können des auf diesem technischen Gebiet tätigen Fachmannes liegt.

Der Schutzbereich ist durch die Ansprüche bestimmt. Die Beschreibung und die Zeichnungen sind jedoch zur Auslegung der Ansprüche heranzuziehen. Einzelmerkmale oder Merkmalskombinationen aus den gezeigten und beschriebenen unterschiedlichen Ausführungsbeispielen können für sich eigenständige erfinderische Lösungen darstellen. Die den eigenständigen erfinderischen Lösungen zugrundeliegende Aufgabe kann der Beschreibung entnommen werden.

Sämtliche Angaben zu Wertebereichen in gegenständlicher Beschreibung sind so zu verstehen, dass diese beliebige und alle Teilbereiche daraus mitumfassen, z.B. ist die Angabe 1 bis 10 so zu verstehen, dass sämtliche Teilbereiche, ausgehend von der unteren Grenze 1 und der oberen Grenze 10 mit umfasst sind, d.h. sämtliche Teilbereiche beginnen mit einer unteren Grenze von 1 oder größer und enden bei einer oberen Grenze von 10 oder weniger, z.B. 1 bis 1,7, oder 3,2 bis 8,1, oder 5,5 bis 10.

Der Ordnung halber sei abschließend darauf hingewiesen, dass zum besseren Verständnis des Aufbaus Elemente teilweise unmaßstäblich und/oder vergrößert und/oder verkleinert dargestellt wurden.

### Bezugszeichenliste

- 1: Futterabgabeanlage
- 2: Futterstelle
- 3: Zufuhrvorrichtung
- 4: Abgabebehälter
- 5: Dosiervorrichtung
- 6: Dosierspalt
- 7: Verteilorgan
- 8: Kegelachse
- 9: Aufstandsfläche
- 10: Verteilorganende
- 11: Förderorgan
- 12: Betätigungsorgan
- 13: Ende
- 14: Ende
- 15: Stirnwand
- 16: Trennelement
- 17: erster Schenkel
- 18: zweiter Schenkel
- 19: Ansatz
- 20: Ansatzfläche
- 21: Stufenfläche
- 22: Einzelabschnitte
- 23: Umfangsnut
- 24: Auffangschale
- 25: Verbindungsanordnung
- 26: Speicherbehälter
- 27: Verschlussorgan
- 28: Verbindungsleitung
- 29: Sperrorgan

## Patentansprüche

1. Futterabgabeanlage (1) zur Versorgung von Tieren mit Tiernahrung, insbesondere mit Trockenfutter, an einer Futterstelle (2), die Futterabgabeanlage (1) umfasst
- eine Zufuhrvorrichtung (3), welche Zufuhrvorrichtung (3) dazu ausgebildet ist, die zur Versorgung der Tiere vorgesehene Tiernahrung zur Futterstelle (2) zu verbringen,
- einen Abgabebehälter (4), welcher Abgabebehälter (4) zur Aufnahme der zuzuführenden Tiernahrung ausgebildet ist und mit der Zufuhrvorrichtung (3) in Strömungsverbindung steht oder in Strömungsverbindung bringbar ist,
- eine Dosiervorrichtung (5), welche Dosiervorrichtung (5) zur mengenmäßigen Abgabe der abzugebenden Tiernahrung aus dem Abgabebehälter (4) ausgebildet ist und bodenseitig des Abgabebehälters (4) angeordnet oder ausgebildet ist, und einen Dosierspalt (6) definiert,
**dadurch gekennzeichnet,**
- **dass** die Dosiervorrichtung (5) ein kegelförmig ausgebildetes Verteilorgan (7) umfasst, welches Verteilorgan (7) eine Kegelachse (8) definiert und bodenseitig bezüglich des Abgabebehälters (4) angeordnet ist,
- **dass** das kegelförmig ausgebildete Verteilorgan (7) mit seinem sich kegelförmig verjüngenden Verteilorganende (10) zumindest teilweise in den Abgabebehälter (4) hineinragt,
- **dass** die Dosiervorrichtung (5) weiters ein Förderorgan (11) für die abzugebende Tiernahrung und zumindest ein am Förderorgan (11) angeordnetes oder ausgebildetes Betätigungsorgan (12) umfasst,
- **dass** der Dosierspalt (6) der Dosiervorrichtung (5) zwischen einem bodenseitigen Ende (13) des Abgabebehälters (4) und dem Förderorgan (11) angeordnet ist, und
- **dass** das Förderorgan (11) am kegelförmig ausgebildeten Verteilorgan (7) um seine Kegelachse (8) drehbeweglich gelagert ist.

2. Futterabgabeanlage (1) nach Anspruch 1, **dadurch gekennzeichnet, dass** der Abgabebehälter (4) hohlzylinderförmig ausgebildet ist und bevorzugt an seinem dem bodenseitigen Ende (13) gegenüberliegenden Ende (14) mit einer Stirnwand (15) verschlossen ist.

3. Futterabgabeanlage (1) nach Anspruch 1 oder 2, **dadurch gekennzeichnet, dass** der Abgabebehälter (4) bezüglich des Verteilorgans (7) in Richtung der Kegelachse (8) des Verteilorgans (7) verlagerbar ist.

4. Futterabgabeanlage (1) nach einem der vorhergehenden Ansprüche, **dadurch gekennzeichnet, dass** am Abgabebehälter (4) mehrere über den Umfang verteilt angeordnete und in radialer Richtung abstehende Trennelemente (16) angeordnet sind.

5. Futterabgabeanlage (1) nach Anspruch 4, **dadurch gekennzeichnet, dass** die Trennelemente (16) derart angeordnet oder ausgebildet sind, dass eine vollständige umfängliche Umdrehung des Förderorgans (11) mitsamt dessen zumindest einen Betätigungsorgan (12) um die Kegelachse (8) durchführbar ist.

6. Futterabgabeanlage (1) nach einem der vorhergehenden Ansprüche, **dadurch gekennzeichnet, dass** das Förderorgan (11) im Axialschnitt gesehen einen ersten Schenkel (17) und einen winkelig dazu ausgerichteten zweiten Schenkel (18) umfasst.

7. Futterabgabeanlage (1) nach Anspruch 6, **dadurch gekennzeichnet, dass** der erste Schenkel (17) am kegelförmig ausgebildeten Verteilorgan (7) anliegend daran abgestützt ist.

8. Futterabgabeanlage (1) nach Anspruch 6, **dadurch gekennzeichnet, dass** der zweite Schenkel (18) eine in Normalrichtung bezüglich der Kegelachse (8) verlaufende Ausrichtung oder eine auf die vom Abgabebehälter (4) abgewendete Seite geneigt verlaufende Ausrichtung aufweist.

9. Futterabgabeanlage (1) nach einem der vorhergehenden Ansprüche, **dadurch gekennzeichnet, dass** das kegelförmig ausgebildete Verteilorgan (7) im Axialschnitt gesehen einen treppenförmig ausgebildeten Ansatz (19) mit einer dem Abgabebehälter (4) zugewendeten Ansatzfläche (20) aufweist und die Ansatzfläche (20) eine gegengleich bezüglich des zweiten Schenkels (17) verlaufende Ausrichtung aufweist und dass der zweite Schenkel (18) bevorzugt auf der Ansatzfläche (20) anliegend daran abgestützt ist.

10. Futterabgabeanlage (1) nach Anspruch 9, **dadurch gekennzeichnet, dass** der Ansatz (19) im Axialschnitt gesehen eine an die Ansatzfläche (20) daran anschließend Stufenfläche (21) umfasst und die Stufenfläche (21) vom äußeren Rand der Ansatzfläche (20) in Richtung auf eine Kegelfläche des Verteilorgans (7) verlaufend ausgerichtet ist und bevorzugt eine zylindrische Umfangsform aufweist.

11. Futterabgabeanlage (1) nach einem der Ansprüche 6 bis 8, **dadurch gekennzeichnet, dass** das zumindest eine Betätigungsorgan (12) randseitig außenliegend am zweiten Schenkel (18) des Förderorgans (11) angeordnet oder ausgebildet ist.

12. Futterabgabeanlage (1) nach einem der vorhergehenden Ansprüche, **dadurch gekennzeichnet, dass** das zumindest eine Betätigungsorgan (12) bevorzugt bügelförmig umlaufend ausgebildet ist und über den Umfang gesehen mehrere Einzelabschnitte (22-1 bis 22-5) hintereinander angeordnet oder vorgesehen sind.

13. Futterabgabeanlage (1) nach Anspruch 12, **dadurch gekennzeichnet, dass** ein erster Einzelabschnitt (22-1) im Axialschnitt gesehen eine in etwa parallele Ausrichtung bezüglich der Stufenfläche (21) aufweist und unmittelbar benachbart zu dieser angeordnet ist.

14. Futterabgabeanlage (1) nach einem der vorhergehenden Ansprüche, **dadurch gekennzeichnet, dass** das zumindest eine Betätigungsorgan (12) zumindest teilweise in einer über den Umfang des Verteilorgans (7) vertieft ausgebildeten Umfangsnut (23) aufgenommen ist.

15. Futterabgabeanlage (1) nach einem der vorhergehenden Ansprüche, **dadurch gekennzeichnet, dass** eine Auffangschale (24) vorgesehen ist, welche Auffangschale (24) bodenseitig des Verteilorgans (7) angeordnet ist und das Verteilorgan (7) in radialer Richtung auf die von der Kegelachse (8) abgewendete Seite überragt.

16. Futterabgabeanlage (1) nach einem der vorhergehenden Ansprüche, **dadurch gekennzeichnet, dass** eine Verbindungsanordnung (25) vorgesehen ist, mittels welcher Verbindungsanordnung (25) ein Aufnahmeraum des Abgabebehälters (4) mit der Zufuhrvorrichtung (3) in Strömungsverbindung steht, bevorzugt in Leitungsverbindung steht, und die Verbindungsanordnung (25) zumindest einen Speicherbehälter (26) umfasst.

17. Futterabgabeanlage (1) nach Anspruch 16, **dadurch gekennzeichnet, dass** im Speicherbehälter (26) abgabeseitig in Richtung zum Abgabebehälter (4) ein betätigbares Verschlussorgan (27) vorgesehen ist, welches Verschlussorgan (27) zwischen einer Verschlussstellung und einer Abgabestellung und vice versa verstellbar ist.

18. Futterabgabeanlage (1) nach Anspruch 16 oder 17, **dadurch gekennzeichnet, dass** ein betätigbares Sperrorgan (29) zwischen der Zufuhrvorrichtung (3) und dem Speicherbehälter (26) vorgesehen ist, welches Sperrorgan (29) zwischen einer Sperrstellung und einer Freigabestellung und vice versa verstellbar ist.
